# EUROPEAN PATENT SPECIFICATION

(11) **EP 4 521 709 B1**
(45) Date of publication and mention of the grant of the patent: **02.09.2026**
(21) Application number: 23845354.2
(22) Date of filing: 17.07.2023
(51) Int. Cl.: G06F 9/50, H04L 47/72, G06F 9/48, H04L 41/0897, H04L 47/76, H04L 67/00, G06F 9/455

(54) **RESOURCE USE METHOD AND APPARATUS**
VERFAHREN UND VORRICHTUNG ZUR RESSOURCENNUTZUNG
PROCÉDÉ ET APPAREIL D'UTILISATION DE RESSOURCES

(30) Priority: 26.07.2022 CN 202210883633
(43) Date of publication of application: 12.03.2025
(73) Proprietor: Alipay (Hangzhou) Information Technology Co., Ltd., Hangzhou, Zhejiang 310000 (CN)
(72) Inventor: LI, Denghui, Hangzhou, Zhejiang 310000 (CN); YANG, Tongkai, Hangzhou, Zhejiang 310000 (CN); DU, Jun, Hangzhou, Zhejiang 310000 (CN)
(74) Representative: Fish & Richardson P.C.
(86) International application number: PCT/CN2023/107630
(87) International publication number: WO 2024/022142

(56) References cited:
- CN-A- 108 874 502
- CN-A- 109 739 614
- CN-A- 111 190 688
- CN-A- 111 722 908
- CN-A- 111 722 908
- CN-A- 111 880 939
- CN-A- 112 286 622
- CN-A- 115 361 349
- US-A1- 2011 239 215
- US-A1- 2013 346 572
- US-A1- 2015 295 791
- US-A1- 2016 261 687
- US-A1- 2019 250 946

## Description

### TECHNICAL FIELD

One or more embodiments of this specification relate to communication technologies, and in particular, to resource use methods and apparatuses.

### BACKGROUND

In an implementation process of a service application, various resources such as CPU cores, memory, and magnetic disk resources need to be occupied. Therefore, how to better use resources and reduce resource waste has always been an important issue.

A current resource use method is as follows: when a service request arrives, checking whether remaining resources in a physical machine can satisfy a resource requirement of the service request; and if yes, allocating corresponding resources for the service request in the physical machine; otherwise, resource allocation fails.

The current resource use method often causes resource fragments in the physical machine, resulting in resource waste. For example, in large-scale cluster scheduling, some physical machines in a cluster have remaining resources, but because all the remaining resources are small-scale fragment resources, the remaining fragment resources cannot be used.

US 2016/0261687 A1 describes a method for defragmenting a cluster service to service additional capacity requests. Defragmentation can be performed when customers request reservations of resources for new deployments on the cluster service or when customers request a larger reservation of resources for additional capacity for an existing deployment.

### SUMMARY

One or more embodiments of this specification describe resource use methods and apparatuses to better use resources and reduce resource waste.

The invention is defined in the appended claims. According to a first aspect, a computer-implemented method for resource use according to any one of claims 1 to 10 is provided.

According to a second aspect, an apparatus according to claim 11 is provided.

According to a third aspect, a computing device according to claim 12 is provided. According to a fourth aspect, a computer-readable storage medium according to claim 13 is provided.

The resource use methods and apparatuses provided in the embodiments of this specification have at least the following beneficial effects.
1. The M allocated service requests (each allocated service request occupies relatively small-scale resources) corresponding to the migrating node are migrated to one or more other nodes by using a defragmentation idea, so that relatively large-scale resources can be reserved in the migrating node to satisfy a large-scale resource requirement of the service request. As can be learned, in the embodiments of this specification, remaining resources in the node can be better used, and resource waste can be avoided.
2. A resource cache pool may be constructed to store defragmented large-scale resources. When a service request that requires large-scale resources arrives, resources can be directly allocated from the resource cache pool, and there is no need to wait for a resource defragmentation process. Therefore, resources are allocated for the service request more quickly and efficiently.
3. When a service request that requires large-scale resources arrives, resource defragmentation can be performed. Therefore, resources can be more effectively used, and resource waste can be further avoided.
4. Resources are reserved in the target node for the service request that needs to be migrated. This prevents a case that the target node allocates the resources for another incoming service request, leaving no resource available for the service request that needs to be migrated. Therefore, migration failure is avoided, and a migration success rate is further increased.
5. The resources released by the migrating node are reserved, so that the remaining resources in the migrating node satisfy the quantity of reserved resources (for example, a resource requirement of a currently received large-scale service request). This prevents a case that the migrating node allocates the resources for another incoming service request, thereby avoiding failure in reserving the resources for the large-scale service request and further increasing a success rate of resource scheduling.

### BRIEF DESCRIPTION OF DRAWINGS

To describe the technical solutions in the embodiments of this specification more clearly, the following briefly describes the accompanying drawings required for describing the embodiments. Clearly, the accompanying drawings in the following description show merely some embodiments of this specification, and a person of ordinary skill in the art may still derive other drawings from these accompanying drawings without creative efforts.
FIG. 1 is a schematic diagram illustrating resource allocation;
FIG. 2 is a schematic diagram illustrating a system architecture applied to one or more embodiments of this specification;
FIG. 3 is a flowchart illustrating a resource use method, according to one or more embodiments of this specification;
FIG. 4 is a schematic diagram illustrating resource defragmentation, according to one or more embodiments of this specification;
FIG. 5 is a flowchart illustrating a resource use method, according to one or more other embodiments of this specification;
FIG. 6 is a schematic diagram illustrating a resource use apparatus, according to one or more embodiments of this specification; and
FIG. 7 is a schematic diagram illustrating a resource use apparatus, according to one or more other embodiments of this specification.

### DESCRIPTION OF EMBODIMENTS

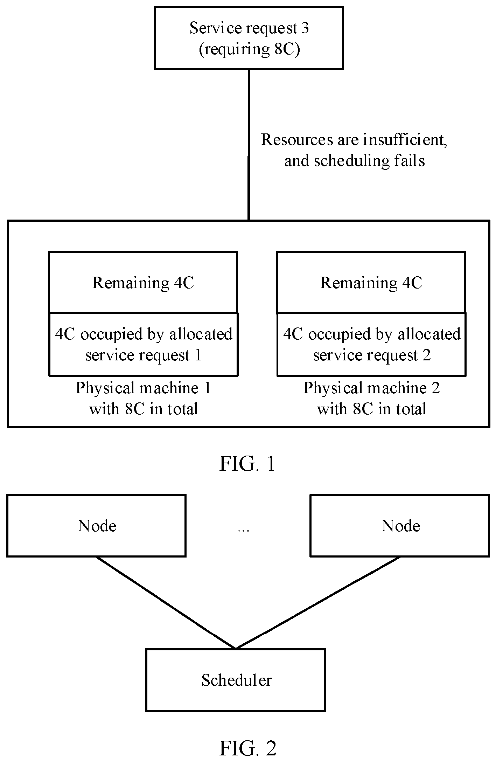

As mentioned above, a resource use method in a related technology often causes resource fragments in a physical machine, resulting in resource waste. For example, as shown in FIG. 1, there are a total of eight CPU cores (in FIG. 1, CPU cores are all abbreviated as C) in physical machine 1, and a total of eight CPU cores in physical machine 2. When service request 1 that requires four CPU cores arrives, four CPU cores in physical machine 1 are allocated for service request 1. When service request 2 that requires four CPU cores arrives, four CPU cores in physical machine 2 are allocated for service request 2. Then when service request 3 that requires eight CPU cores arrives, because there are only four remaining CPU cores in physical machine 1 and four remaining CPU cores in physical machine 2, and neither of the physical machines can satisfy a resource requirement of service request 3 alone, resources of eight CPU cores cannot be allocated for service request 3. Consequently, resource scheduling fails, and a service requested by service request 3 cannot be performed.

In embodiments of this specification, a defragmentation idea is proposed. Fragment resources distributed in various nodes (which may be physical machines or virtual machines) are defragmented to form large-scale resources, so that a resource scheduling requirement of a service request that requires large-scale resources can be satisfied and that resources can be better used.

The solutions provided in this application are hereinafter described with reference to the accompanying drawings.

First, it is worthwhile to note that the terms used in the embodiments of this application are merely intended to describe specific embodiments, but not intended to limit this application. The terms "a/an", "the", and "this" in singular forms used in the embodiments and the appended claims of this application are also intended to include plural forms, unless otherwise specified in the context clearly.

To facilitate understanding of the method provided in this specification, a system architecture involved in and applicable to this specification is first described. As shown in FIG. 2, the system architecture mainly includes a scheduler and at least two nodes.

The scheduler may be a cloud service device, a single server, or a server group including a plurality of servers. The scheduler is responsible for allocating resources in each node for various service requests to ensure that services can be performed smoothly.

A node is a resource owner, providing corresponding resources for service requests based on scheduling of the scheduler.

A typical application scenario of the system architecture shown in FIG. 2 is a cluster scheduling system. In other words, the at least two nodes are nodes in a cluster, and the scheduler is responsible for cluster scheduling.

The scheduler and the at least two nodes interact by using a network. The network may include various connection types, such as a wired or wireless communication link or an optical cable.

In embodiments of this specification, the nodes may be physical machines or virtual machines. The resources may be hardware resources such as CPU cores, memory, or magnetic disk resources, or may be virtual resources such as virtualized GPUs or virtualized input/output bandwidths.

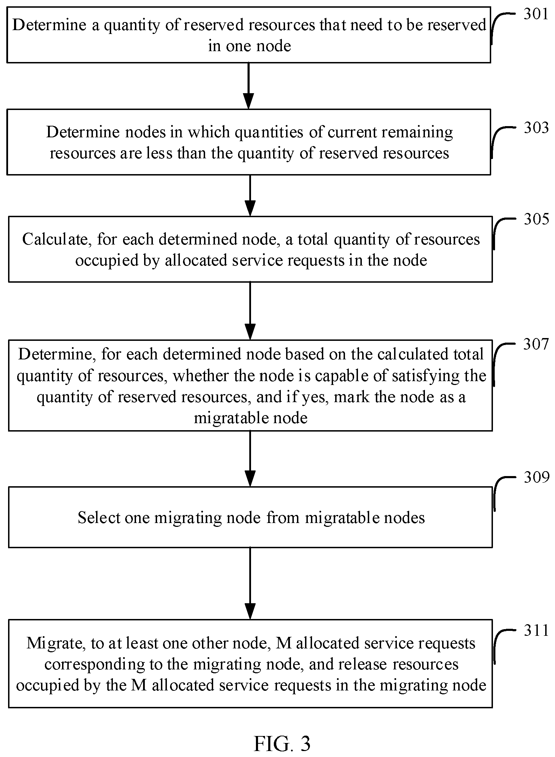

FIG. 3 is a flowchart illustrating a resource use method, according to one or more embodiments of this specification. The method is performed by a resource use apparatus. The apparatus may be located in a scheduler. It can be understood that the method can also be performed by any apparatus, device, platform, or device cluster that has computing and processing capabilities. Referring to FIG. 3, the method includes step 301 to step 311.

Step 301: Determine a quantity of reserved resources that need to be reserved in one node.

Step 303: Determine nodes in which quantities of current remaining resources are less than the quantity of reserved resources.

Step 305: Calculate, for each determined node, a total quantity of resources occupied by allocated service requests in the node.

Step 307: Determine, for each determined node based on the calculated total quantity of resources, whether the node is capable of satisfying the quantity of reserved resources, and if yes, mark the node as a migratable node.

Step 309: Select one migrating node from migratable nodes.

Step 311: Migrate, to at least one other node, the M allocated service requests corresponding to the migrating node, and release resources occupied by the M allocated service requests in the migrating node, where M satisfies a condition that after the resources occupied by the M allocated service requests are released, a quantity of remaining resources in the migrating node is not less than the quantity of reserved resources, where M is a positive integer not less than 1.

As can be learned, the M allocated service requests (each allocated service request occupies relatively small-scale resources) corresponding to the migrating node are migrated to one or more other nodes by using a defragmentation idea in the resource use method in the embodiments of this specification shown in FIG. 3, so that relatively large-scale resources can be reserved in the migrating node to satisfy a large-scale resource requirement of a service request. As can be learned, in the embodiments of this specification, remaining resources in the node can be better used, and resource waste can be avoided.

The following separately describes each step in FIG. 3 with reference to the accompanying drawings and specific examples.

First, in step 301, the quantity of reserved resources that need to be reserved in one node is determined.

The resource use method provided in the embodiments of this specification can be applied to various service scenarios, such as any one of the following.

Service scenario 1: Resource defragmentation is performed in advance, and a resource cache pool is constructed, where the resource cache pool is used to store various large-scale resources that are obtained through resource defragmentation. When a subsequent service request that requires large-scale resources arrives, resources can be directly allocated from the resource cache pool, and there is no need to wait for a resource defragmentation process. In service scenario 1, resources are allocated for the service request more quickly and efficiently.

In service scenario 1, for one or more nodes, resource defragmentation and migration can be separately performed on the node.

In this case, the process of step 301 includes: Step 301A1: Estimate large-scale resources required by future service requests. Step 301A2: Determine, based on the requirement, the quantity of reserved resources that need to be reserved in one node.

For example, in step 301A1, based on expert experience, it can be estimated that a future service request may require 16C resources. In this case, in step 301A2, it is determined that 16C resources need to be reserved in a certain node.

Service scenario 2: When a service request that requires large-scale resources arrives, resource defragmentation is performed. In service scenario 2, resources can be better used, and resource waste can be further avoided.

In service scenario 2, the process of step 301 includes: determining, based on sizes of resources required by a currently received service request, the quantity of reserved resources that need to be reserved in one node.

For example, if a service request is currently received, and 16C resources are requested by the service request, it is determined that 16C resources need to be reserved in a certain node.

Then in step 303, the nodes in which the quantities of current remaining resources are less than the quantity of reserved resources are determined.

In one or more embodiments of this specification, corresponding to service scenario 2, in addition to a requirement for a quantity of resources, another scheduling requirement may exist in the currently received service request, for example, a scheduling requirement for affinity of a physical machine type or a scheduling requirement for a service type that can be satisfied by a node. Therefore, an implementation process of step 303 includes step 303A and step 303B.

Step 303A: Find whether there is a node with sufficient current remaining resources to satisfy sizes of resources required by the currently received service request, for example, 16C. If no, it indicates that a quantity of remaining resources in each node is less than 16C, and step 303B is performed. If yes, required resources are directly allocated in the found node for the service request, and the current procedure in FIG. 3 is ended.

Step 303B: Find each node that can satisfy another scheduling requirement in addition to the resource requirement.

Another scheduling requirement may exist in the currently received service request. For example, it is specified that resources in a specific type of node (for example, a specific physical model) are required. In this case, each node determined in step 303B is a node in which a quantity of current remaining resources is less than the quantity of reserved resources, and which satisfies another scheduling requirement in addition to the resource requirement in the currently received service request.

For example, determined nodes in which quantities of current remaining resources are less than the quantity of reserved resources include six nodes: node 1 to node 6. However, only node 1 to node 5 of the six nodes can satisfy another scheduling requirement in addition to the resource requirement, and node 6 cannot satisfy another scheduling requirement in addition to the resource requirement. Therefore, node 6 is excluded, and the nodes finally obtained by performing step 303A and step 303B include node 1 to node 5.

Then in step 305, for each determined node, the total quantity of resources occupied by the allocated service requests in the node is calculated.

For example, all resources allocated for service request 1, service request 2, and service request 3 among service requests allocated to a node are resources in node 1. However, migration of service request 1 may not be allowed due to a high priority or another reason, that is, resources required by service request 1 are not allowed to be reallocated to another node. Therefore, resource defragmentation needs to be performed for an allocated service request that allows migration. Therefore, in one or more embodiments of this specification, the allocated service request in the procedure shown in FIG. 3 is an allocated service request whose service attribute allows migration.

Then in step 307, for each determined node, whether the node is capable of satisfying the quantity of reserved resources is determined based on the calculated total quantity of resources, and if yes, the node is marked as a migratable node.

With reference to the processing in step 303A and step 303B, the nodes finally obtained in step 303 include node 1 to node 5. In step 305, for each of the five nodes from node 1 to node 5, a total quantity of resources already occupied by allocated service requests in the node that allow migration is calculated. In step 307, based on the total quantity of resources calculated for each of node 1 to node 5, it is determined which of node 1 to node 5 may be marked as a migratable node, that is, as a candidate node that can migrate service requests.

In one or more embodiments of this specification, an implementation process of determining, based on the calculated total quantity of resources, whether the node satisfies the quantity of reserved resources in step 307 includes: determining whether a sum of the calculated total quantity of resources and a quantity of current remaining resources in the node is not less than the quantity of reserved resources, and if yes, determining that the quantity of reserved resources is satisfied.

In one or more other embodiments of this specification, an implementation process of determining, based on the calculated total quantity of resources, whether the node satisfies the quantity of reserved resources in step 307 includes: determining whether the calculated total quantity of resources is not less than the quantity of reserved resources, and if yes, determining that the quantity of reserved resources is satisfied.

For example, among node 1 to node 5, for each of node 1 to node 3, a sum of a total quantity of resources occupied by allocated service requests in the node and current remaining resources is calculated to be not less than the quantity of reserved resources; however, for either of node 4 and node 5, a sum of a total quantity of resources occupied by allocated service requests in the node and current remaining resources is calculated to be less than the quantity of reserved resources. Therefore, node 4 and node 5 are excluded, and node 1, node 2, and node 3 are marked as migratable nodes.

Then in step 309, one migrating node is selected from the migratable nodes.

In this step, each migratable node is a node that can satisfy the quantity of reserved resources after the allocated service requests are migrated. Therefore, one migrating node more suitable for performing a task needs to be selected from the migratable nodes.

Certainly, if it is determined in step 303 that there is only one node in which a determined quantity of current remaining resources is less than the quantity of reserved resources, the migrating node in step 309 is the node determined in step 303.

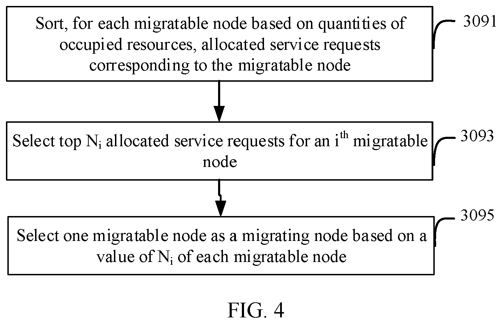

If it is determined in step 303 that there are two or more nodes in which quantities of current remaining resources are less than the quantity of reserved resources, in one or more embodiments of this specification, referring to FIG. 4, an implementation process of step 309 includes step 3091 to step 3095.

Step 3091: Sort, for each migratable node based on quantities of occupied resources, allocated service requests corresponding to the migratable node.

Step 3093: Select top Nᵢ allocated service requests for an i^{th} migratable node, where Nᵢ is an integer not less than 1, and Nᵢ satisfies a condition that after resources occupied by the top Nᵢ allocated service requests are released, a quantity of remaining resources in the i^{th} migratable node is not less than the quantity of reserved resources.

Step 3095: Select one migratable node as the migrating node based on a value of Nᵢ of each migratable node.

Step 3091 to step 3095 relate to two selection processes. The first selection process is to select a migratable node to serve as a node for subsequent service request migration (denoted as the migrating node). The second selection process is to select which allocated service requests (usually referred to as victims) in the node are to be migrated. The first selection is performed based on a selection result of the second selection. In one or more embodiments of this specification, an implementation of step 3091 includes: sorting the allocated service requests corresponding to the migratable node in ascending order of the quantities of occupied resources. Based on the ascending order of the quantities of occupied resources, for a service request that occupies a small quantity of resources, it is easier to find sufficient resources in another node, and subsequent migration is more likely to succeed. Certainly, in one or more other embodiments of this specification, the allocated service requests corresponding to the migratable node may also be sorted in descending order of the quantities of occupied resources, so that fewer service requests are migrated.

The sorting in ascending order of the quantities of occupied resources and migratable nodes including node 1, node 2, and node 3 are used as an example to describe step 3091 to step 3095. For node 1, there are three allocated service requests corresponding to node 1, and the three service requests are sorted in ascending order of quantities of occupied resources; then in step 3093, if only the first two (but not more) allocated service requests need to be migrated, and remaining resources in node 1 can satisfy the quantity of reserved resources after corresponding resources are released, the first two allocated service requests are selected, and for node 1, Ni = 2. For another example, for node 2, there are five allocated service requests corresponding to node 2, and the five service requests are sorted in ascending order of quantities of occupied resources; then in step 3093, if only the first three (but not more) requests need to be migrated, and remaining resources in node 2 can satisfy the quantity of reserved resources after corresponding resources are released, the first three allocated service requests are selected, and for node 2, N₂ = 3. For node 3, there are five allocated service requests corresponding to node 3, and the five service requests are sorted in ascending order of quantities of occupied resources; then in step 3093, if only the first four requests need to be migrated, and remaining resources in node 3 can satisfy the quantity of reserved resources after corresponding resources are released, the first four allocated service requests are selected, and for node 3, N₃ = 4. As such, in step 3095, one migratable node can be selected as the migrating node based on values of N₁, N₂, and N₃.

In one or more embodiments of this specification, an implementation of step 3095 includes: sorting the migratable nodes in ascending order of values of Nᵢ; and selecting a current top migratable node as the migrating node. In other words, a node with a smallest value of Nᵢ is selected as the migrating node that migrates allocated service requests. In the above-mentioned example, because the value of Nᵢ is the smallest, node 1 is selected as the migrating node. Certainly, the first Ni = 2 allocated service requests in node 1 are selected for migration.

A reason for selecting the node with the smallest value of Nᵢ as the migrating node that migrates service requests is as follows: If the quantity of migrated service requests is smaller, there is less impact on an existing service, and the migration is also more likely to succeed.

Then in step 311, the M allocated service requests corresponding to the migrating node are migrated to the at least one other node, and the resources occupied by the M allocated service requests in the migrating node are released, where M satisfies a condition that after the resources occupied by the M allocated service requests are released, the quantity of remaining resources in the migrating node is not less than the quantity of reserved resources.

M is actually equal to the value of Nᵢ corresponding to the migrating node. For example, the migrating node is node 1, and M is equal to N₁, that is, 2. Two service requests already allocated to node 1 are migrated to other nodes.

In one or more embodiments of this specification, in a migration process, a preemption approach can be proposed for both a migrating party and a migrated party.

Resource reservation is performed on the migrated party by using the preemption approach. In this case, in step 311, for each of the M allocated service requests, the following is performed: determining, based on a quantity of resources occupied by the allocated service request, whether the allocated service request is migratable to a target node other than the migrating node; and if yes, reserving, in the target node, a quantity of resources required by the allocated service request, and then migrating the allocated service request to the target node.

It can be learned that resources are reserved in the target node for the service request that needs to be migrated. This prevents a case that the target node allocates the resources for another incoming service request before migration is completed, thereby avoiding migration failure and further increasing a migration success rate.

By using the preemption approach, on the other hand, resource reservation is performed on the migrating party. As such, in step 311, when the resources occupied by the M allocated service requests in the migrating node are released, the method further includes: marking each released resource as a reserved resource for the currently received service request. As can be learned, the resources released by the migrating node are reserved, so that the remaining resources in the migrating node satisfy the quantity of reserved resources (for example, a resource requirement of a currently received large-scale service request). This prevents a case that the migrating node allocates the resources for another incoming service request, leaving no resource available for the large-scale service request. Therefore, migration failure is avoided, and a success rate of resource scheduling is further increased.

It is worthwhile to note that the embodiments of this specification are more applicable to cluster resource scheduling, where each node is a node in a cluster, and the scheduler uses resources in each node in the cluster according to the method in the embodiments of this specification and performs resource defragmentation to satisfy a resource requirement of a large-scale service request.

It is worthwhile to note that, in the embodiments of this specification, a preemption algorithm can be configured, where the preemption algorithm provides a policy for selecting a migrating node and a policy for selecting an allocated service request that needs to be migrated. The preemption algorithm can be configured or modified, so that the resource use method is more flexible.

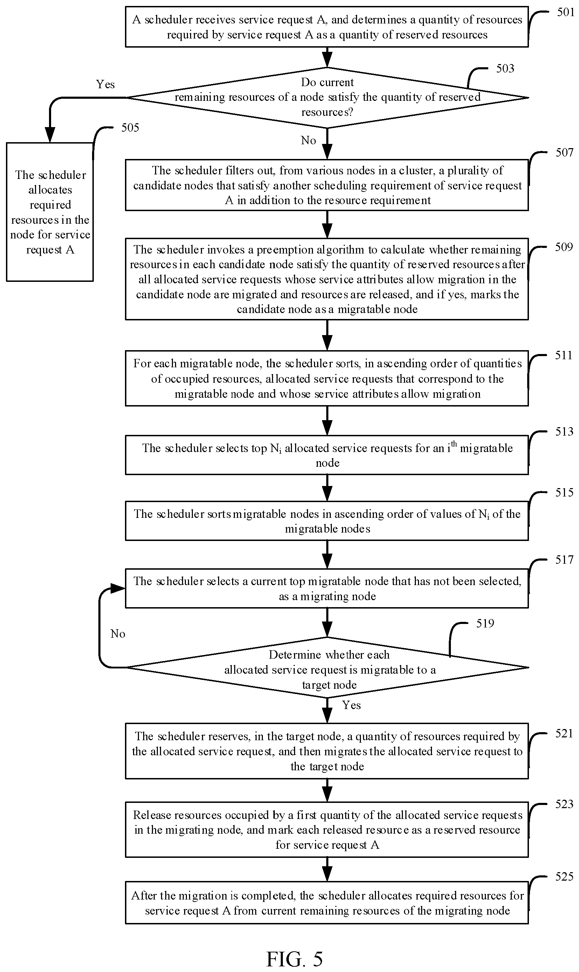

To help understand the method in this specification, the following describes a resource use method with reference to another feasible embodiment. FIG. 5 is a flowchart illustrating a resource use method, according to one or more other embodiments of this specification. Referring to FIG. 2 and FIG. 5, using service scenario 2 as an example, and using cluster scheduling as an example, the method in this embodiment includes step 501 to step 525.

Step 501: A scheduler receives service request A, and determines a quantity of resources required by service request A as a quantity of reserved resources.

Step 503: The scheduler determines whether current remaining resources of a node among nodes in a cluster satisfy the quantity of reserved resources (that is, the resource requirement of service request A). If yes, step 505 is performed; otherwise, step 507 is performed.

Step 505: The scheduler allocates required resources in the node for service request A, and the current procedure is ended.

Step 507: The scheduler filters out, from various nodes in the cluster, a plurality of candidate nodes that satisfy another scheduling requirement of service request A in addition to the resource requirement.

Step 509: The scheduler invokes a preemption algorithm to calculate whether remaining resources in each candidate node satisfy the quantity of reserved resources after all allocated service requests whose service attributes allow migration in the candidate node are migrated and resources are released, and if yes, marks the candidate node as a migratable node.

Step 511: For each migratable node, the scheduler sorts, in ascending order of quantities of occupied resources, allocated service requests that correspond to the migratable node and whose service attributes allow migration.

Step 513: The scheduler selects top Nᵢ allocated service requests for an i^{th} migratable node, where Nᵢ is an integer not less than 1, and Nᵢ satisfies a condition that after resources occupied by the top Nᵢ allocated service requests are released, a quantity of remaining resources in the i^{th} migratable node is not less than the quantity of reserved resources.

Step 515: The scheduler sorts migratable nodes in ascending order of values of Nᵢ of the migratable nodes.

Step 517: The scheduler selects a current top migratable node that has not been selected, as a migrating node.

Step 519: For each of top M allocated service requests in the migrating node (that is, top Nᵢ requests corresponding to the migrating node), the scheduler performs: determining, based on a quantity of resources occupied by the request, whether the request is migratable to a target node other than the migrating node in the cluster (that is, determining whether the cluster includes a target node that can allocate required resources for the allocated service request); and if yes, performing step 521; otherwise, returning to step 517.

Step 521: The scheduler reserves, in the target node, a quantity of resources required by the allocated service request, and then migrates the allocated service request to the target node.

Step 523: Release resources occupied by the M allocated service requests in the migrating node, and mark each released resource as a reserved resource for service request A.

Step 525: After the migration is completed, the scheduler allocates required resources for service request A from current remaining resources of the migrating node.

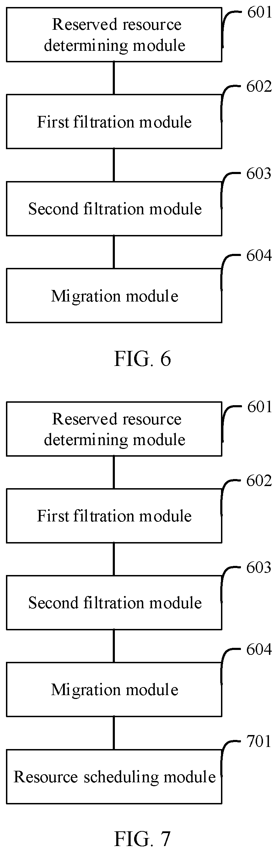

In one or more embodiments of this specification, a resource use apparatus is provided. Referring to FIG. 1 and FIG. 6, the apparatus can be applied to a scheduler. The apparatus includes: a reserved resource determining module 601, configured to determine a quantity of reserved resources that need to be reserved in one node; a first filtration module 602, configured to determine nodes in which quantities of current remaining resources are less than the quantity of reserved resources; calculate, for each determined node, a total quantity of resources occupied by allocated service requests in the node; and determine, based on the calculated total quantity of resources, whether the node is capable of satisfying the quantity of reserved resources, and if yes, mark the node as a migratable node; a second filtration module 603, configured to select one migrating node from migratable nodes, and determine M allocated service requests in the migrating node; and a migration module 604, configured to migrate, to at least one other node, the M allocated service requests corresponding to the migrating node; and release resources occupied by the M allocated service requests in the migrating node, where M satisfies a condition that after the resources occupied by the M allocated service requests are released, a quantity of remaining resources in the migrating node is not less than the quantity of reserved resources.

The apparatus further includes a preemption module, configured to store a preemption algorithm. The second filtration module 603 is configured to select the migrating node from the migratable nodes based on the preemption algorithm stored in the preemption module, and determine the M allocated service requests in the migrating node.

Referring to FIG. 7, in one or more embodiments of the apparatus in this specification, the reserved resource determining module 601 is configured to estimate large-scale resources required by future service requests, and determine, based on the requirement, the quantity of reserved resources that need to be reserved in one node; and a resource scheduling module 701 is configured to add current remaining resources of the migrating node to a resource cache pool, and when a service request is received, allocate remaining resources in one node from the resource cache pool for the service request.

In one or more embodiments of the apparatus in this specification, the reserved resource determining module 601 is configured to determine, based on sizes of resources required by a currently received service request, the quantity of reserved resources that need to be reserved in one node; and a resource scheduling module 701 is configured to allocate current remaining resources in the migrating node for the currently received service request.

In one or more embodiments of the apparatus in this specification, the allocated service request is an allocated service request whose service attribute allows migration.

In one or more embodiments of the apparatus in this specification, the first filtration module 602 is configured to determine whether a sum of the calculated total quantity of resources and a quantity of current remaining resources in the node is not less than the quantity of reserved resources, and if yes, determine that the quantity of reserved resources is satisfied, where correspondingly, M satisfies a condition that a sum of a total quantity of resources occupied by the M allocated service requests and a quantity of current remaining resources in the node is not less than the quantity of reserved resources.

In one or more embodiments of the apparatus in this specification, the first filtration module 602 is configured to determine whether the calculated total quantity of resources is not less than the quantity of reserved resources, and if yes, determine that the quantity of reserved resources is satisfied, where correspondingly, M satisfies a condition that a total quantity of resources occupied by the M allocated service requests is not less than the quantity of reserved resources.

In one or more embodiments of the apparatus in this specification, the second filtration module 603 is configured to perform the following based on the preemption algorithm: sorting, for each migratable node based on quantities of occupied resources, allocated service requests corresponding to the migratable node; selecting top Nᵢ allocated service requests for an i^{th} migratable node, where Nᵢ is an integer not less than 1, and Nᵢ satisfies a condition that after resources occupied by the top Nᵢ allocated service requests are released, a quantity of remaining resources in the i^{th} migratable node is not less than the quantity of reserved resources;
and selecting one migratable node as the migrating node based on a value of Nᵢ of each migratable node.

In one or more embodiments of the apparatus in this specification, the second filtration module 603 is configured to sort the allocated service requests corresponding to the migratable node in ascending order of the quantities of occupied resources.

In one or more embodiments of the apparatus in this specification, the second filtration module 603 is configured to sort the migratable nodes in ascending order of values of Nᵢ, and select a current top migratable node as the migrating node.

In one or more embodiments of the apparatus in this specification, the migration module 604 is configured to perform the following for each of the M allocated service requests: determining, based on a quantity of resources occupied by the request, whether the request is migratable to a target node other than the migrating node; and if yes, reserving, in the target node, a quantity of resources required by the request, and then migrating the request to the target node.

In one or more embodiments of the apparatus in this specification, the migration module 604 is configured to mark each released resource as a reserved resource for the currently received service request.

In one or more embodiments of the apparatus in this specification, the apparatus is applied to cluster resource scheduling, and each node is a node in a cluster.

In one or more embodiments of the apparatus in this specification, the resource includes at least one of a hardware resource or a virtual resource.

It is worthwhile to note that the above-mentioned apparatus is usually implemented on a server side and can be separately disposed on an independent server, or a combination of some or all apparatuses can be disposed on the same server. The server can be a single server or a server cluster including a plurality of servers. The server can be a cloud server, also referred to as a cloud computing server or a cloud host, and is a host product in a cloud computing service system, to resolve disadvantages of great management difficulty and poor service extensibility in a conventional physical host and a virtual private server (VPS) service. The above-mentioned apparatus may alternatively be implemented in a computer terminal that has a strong computing capability.

One or more embodiments of this specification provide a computer-readable storage medium. The computer-readable storage medium stores a computer program. When the computer program is executed in a computer, the computer is enabled to perform the method according to any one of the embodiments of this specification.

One or more embodiments of this specification provide a computing device, including a memory and a processor. The memory stores executable code, and when the processor executes the executable code, the method according to any one of the embodiments of this specification is implemented.

It can be understood that the structure shown in the embodiments of this specification constitutes no specific limitation on the apparatus in the embodiments of this specification. In some other embodiments of this specification, the apparatus may include more or fewer components than those shown in the figure, or some components are combined, or some components are split, or component arrangements are different. The illustrated components may be implemented by hardware, software, or a combination of software and hardware.

The embodiments of this specification are all described in a progressive way. For same or similar parts in the embodiments, mutual reference can be made to the embodiments. Each embodiment focuses on a difference from other embodiments. In particular, the apparatus embodiment is basically similar to the method embodiment, and therefore is described briefly. For related parts, reference can be made to related descriptions in the method embodiment.

A person skilled in the art should be aware that in the previous one or more examples, functions described in this application can be implemented by hardware, software, firmware, or any combination thereof. When the functions are implemented by software, the functions can be stored in a computer-readable medium or transmitted as one or more instructions or code on a computer-readable medium.

## Claims

1. A computer-implemented method for resource use, wherein the method comprises:
determining (301) a quantity of reserved resources that needs to be reserved in a node, comprising
estimating large-scale resources required by future service requests, and
determining, based on the large-scale resources requirement, the quantity of reserved resources that needs to be reserved in the node;
determining (303) nodes in which quantities of current remaining resources are less than the quantity of reserved resources;
calculating (305), for each determined node, a total quantity of resources occupied by allocated service requests in the node;
determining (307), for each determined node based on the calculated total quantity of resources, whether the node is capable of satisfying the quantity of reserved resources, and if yes, marking the node as a migratable node;
selecting (309) a migrating node from migratable nodes;
migrating (311), to at least one other node, M allocated service requests corresponding to the migrating node;
releasing resources occupied by the M allocated service requests in the migrating node, wherein M satisfies a condition that after the resources occupied by the M allocated service requests are released, a quantity of remaining resources in the migrating node is not less than the quantity of reserved resources, wherein M is a positive integer not less than 1;
adding current remaining resources of the migrating node to a resource cache pool; and
when a service request is received, allocating remaining resources in the node from the resource cache pool for the service request.

2. The method of claim 1, wherein determining the quantity of reserved resources that needs to be reserved in the node comprises:
determining, based on sizes of resources required by a currently received service request, the quantity of reserved resources that need to be reserved in the node; and
wherein the method further comprises
after releasing the resources occupied by the M allocated service requests in the migrating node:
allocating current remaining resources in the migrating node for the currently received service request.

3. The method of claim 1, wherein an allocated service request of the allocated service requests is an allocated service request whose service attribute allows migration.

4. The method of claim 1, wherein determining, based on the calculated total quantity of resources, whether the node is capable of satisfying the quantity of reserved resources comprises:
determining whether a sum of the calculated total quantity of resources and a quantity of current remaining resources in the node is not less than the quantity of reserved resources, and if yes, determining that the quantity of reserved resources is satisfied, wherein correspondingly, M satisfies a condition that a sum of a total quantity of resources occupied by the M allocated service requests and a quantity of current remaining resources in the node is not less than the quantity of reserved resources; or
determining whether the calculated total quantity of resources is not less than the quantity of reserved resources, and if yes, determining that the quantity of reserved resources is satisfied, wherein correspondingly, M satisfies a condition that a total quantity of resources occupied by the M allocated service requests is not less than the quantity of reserved resources.

5. The method of claim 1, wherein selecting the migrating node from migratable nodes when determining that there are two or more nodes in which quantities of current remaining resources are less than the quantity of reserved resources comprises:
sorting, for each migratable node based on quantities of occupied resources, allocated service requests corresponding to the migratable node;
selecting top Nᵢ allocated service requests for an i^{th} migratable node, wherein Nᵢ is an integer not less than 1, and Nᵢ satisfies a condition that after resources occupied by the top Nᵢ allocated service requests are released, a quantity of remaining resources in the i^{th} migratable node is not less than the quantity of reserved resources; and
selecting a migratable node as the migrating node based on a value of Nᵢ of each migratable node.

6. The method of claim 5, wherein sorting the allocated service requests corresponding to each migratable node based on quantities of occupied resources comprises:
sorting the allocated service requests corresponding to each migratable node in ascending order of the quantities of occupied resources.

7. The method of claim 5, wherein selecting the migratable node as the migrating node based on the value of Nᵢ of each migratable node comprises:
sorting the migratable nodes in ascending order of values of Nᵢ; and
selecting a current top migratable node as the migrating node.

8. The method of claim 1, wherein migrating, to the at least one other node, M allocated service requests corresponding to the migrating node comprises:
for each of the M allocated service requests,
determining, based on a quantity of resources occupied by the request, whether the request is migratable to a target node other than the migrating node; and
if yes,
reserving, in the target node, a quantity of resources required by the allocated service request, and then migrating the allocated service request to the target node.

9. The method of claim 2, wherein releasing the resources occupied by the M allocated service requests in the migrating node further comprises:
marking each released resource as a reserved resource for the currently received service request.

10. The method of claim 1, wherein
the method is applied to cluster resource scheduling, and each node is in a cluster;
and/or
the resource comprises at least one of a hardware resource or a virtual resource;
and/or
the node is a physical machine or a virtual machine.

11. An apparatus, wherein the apparatus comprises:
a reserved resource determining module (601), configured to determine a quantity of reserved resources that need to be reserved in a node, the reserved resource determining module (601) being further configured to estimate large-scale resources required by future service requests and determine, based on the large-scale resources requirement, the quantity of reserved resources that needs to be reserved in the node;
a first filtration module (602), configured to determine nodes in which quantities of current remaining resources are less than the quantity of reserved resources; calculate, for each determined node, a total quantity of resources occupied by allocated service requests in the node; and determine, based on the calculated total quantity of resources, whether the node is capable of satisfying the quantity of reserved resources, and if yes, mark the node as a migratable node;
a second filtration module (603), configured to select a migrating node from migratable nodes, and determine M allocated service requests in the migrating node; and
a migration module (604), configured to migrate, to at least one other node, the M allocated service requests corresponding to the migrating node; and release resources occupied by the M allocated service requests in the migrating node, wherein M satisfies a condition that after the resources occupied by the M allocated service requests are released, a quantity of remaining resources in the migrating node is not less than the quantity of reserved resources.

12. A computing device, comprising a memory and a processor, wherein the memory stores executable code which, when executed by the processor, causes the processor to perform the method according to any one of claims 1 to 10.

13. A computer-readable storage medium comprising instructions which, when executed by a computer, cause the computer to carry out the method of any one of claims 1 to 10.

## Patentansprüche

1. Computerimplementiertes Verfahren für eine Ressourcennutzung, wobei das Verfahren umfasst:
Ermitteln (301) einer Anzahl von reservierten Ressourcen, die in einem Knoten reserviert werden müssen, umfassend
Schätzen von umfangreichen Ressourcen, die für zukünftige Serviceanforderungen erforderlich sind, und
Ermitteln, basierend auf der Anforderung von umfangreichen Ressourcen, der Anzahl von reservierten Ressourcen, die in dem Knoten reserviert werden müssen;
Ermitteln (303) von Knoten, in denen Anzahlen von aktuell verbliebenen Ressourcen kleiner als die Anzahl von reservierten Ressourcen sind;
Berechnen (305), für jeden ermittelten Knoten, einer Gesamtanzahl von Ressourcen, die durch zugewiesene Dienstanforderungen in dem Knoten belegt sind;
Ermitteln (307), für jeden ermittelten Knoten basierend auf der berechneten Gesamtanzahl von Ressourcen, ob der Knoten in der Lage ist, die Anzahl von reservierten Ressourcen zu erfüllen, und wenn ja, Markieren des Knotens als ein migrierbarer Knoten;
Auswählen (309) eines migrierenden Knotens aus den migrierbaren Knoten;
Migrieren (311) von M zugewiesenen Dienstanforderungen, die dem migrierenden Knoten entsprechen, zu mindestens einem anderen Knoten;
Freigeben von Ressourcen, die von den M zugewiesenen Dienstanforderungen in dem migrierenden Knoten belegt sind, wobei M eine Bedingung erfüllt, dass, nachdem die Ressourcen, die von den M zugewiesenen Dienstanforderungen belegt sind, freigegeben wurden, eine Anzahl von verbliebenen Ressourcen in dem migrierenden Knoten nicht kleiner als die Anzahl von reservierten Ressourcen ist, wobei M eine positive ganze Zahl nicht kleiner als 1 ist;
Hinzufügen von aktuell verbliebenen Ressourcen des migrierenden Knotens zu einem Ressourcen-Cache-Pool; und
wenn eine Dienstanforderung empfangen wird, Zuweisen von verbliebenen Ressourcen in dem Knoten aus dem Ressourcen-Cache-Pool zu der Dienstanforderung.

2. Verfahren nach Anspruch 1, wobei das Ermitteln der Anzahl von reservierten Ressourcen, die in dem Knoten reserviert werden müssen, umfasst:
Ermitteln, basierend auf Größen von Ressourcen, die von einer aktuell empfangenen Dienstanforderung benötigt werden, der Anzahl von reservierten Ressourcen, die in dem Knoten reserviert werden müssen; und
wobei das Verfahren ferner umfasst:
nach dem Freigeben der Ressourcen, die von den M zugewiesenen Dienstanforderungen in dem migrierenden Knoten belegt sind:
Zuweisen von aktuell verbliebenen Ressourcen in dem migrierenden Knoten zu der aktuell empfangenen Dienstanforderung.

3. Verfahren nach Anspruch 1, wobei eine zugewiesene Dienstanforderung der zugewiesenen Dienstanforderungen eine zugewiesene Dienstanforderung ist, deren Dienstattribut eine Migration erlaubt.

4. Verfahren nach Anspruch 1, wobei das Ermitteln, basierend auf der berechneten Gesamtanzahl von Ressourcen, ob der Knoten in der Lage ist, die Anzahl von reservierten Ressourcen zu erfüllen, umfasst:
Ermitteln, ob eine Summe der berechneten Gesamtanzahl von Ressourcen und einer Anzahl von aktuell verbliebenen Ressourcen in dem Knoten nicht kleiner als die Anzahl von reservierten Ressourcen ist, und wenn ja, Ermitteln, dass die Anzahl von reservierten Ressourcen erfüllt ist, wobei dementsprechend M eine Bedingung erfüllt, dass eine Summe einer Gesamtanzahl von Ressourcen, die von den M zugewiesenen Dienstanforderungen belegt sind, und einer Anzahl von aktuell verbliebenen Ressourcen in dem Knoten nicht kleiner als die Anzahl von reservierten Ressourcen ist; oder
Ermitteln, ob die berechnete Gesamtanzahl von Ressourcen nicht kleiner als die Anzahl von reservierten Ressourcen ist, und wenn ja, Ermitteln, dass die Anzahl von reservierten Ressourcen erfüllt ist, wobei dementsprechend M eine Bedingung erfüllt, dass eine Gesamtanzahl von Ressourcen, die von den M zugewiesenen Dienstanforderungen belegt ist, nicht kleiner als die Anzahl von reservierten Ressourcen ist.

5. Verfahren nach Anspruch 1, wobei das Auswählen des migrierenden Knotens aus den migrierbaren Knoten, wenn ermittelt wird, dass zwei oder mehr Knoten vorhanden sind, in denen Anzahlen von aktuell verbliebenen Ressourcen kleiner als die Anzahl von reservierten Ressourcen sind, umfasst:
Sortieren, für jeden migrierbaren Knoten basierend auf Anzahlen von belegten Ressourcen, von zugewiesenen Dienstanforderungen, die dem migrierbaren Knoten entsprechen;
Auswählen von Nᵢ zugewiesenen Top-Dienstanforderungen für einen i-ten migrierbaren Knoten, wobei Nᵢ eine ganze Zahl nicht kleiner als 1 ist und wobei Nᵢ eine Bedingung erfüllt, dass nachdem Ressourcen, die von den Nᵢ zugewiesenen Top-Dienstanforderungen belegt sind, freigegeben werden, eine Anzahl von verbliebenen Ressourcen in dem migrierbaren i-ten Knoten nicht kleiner als die Anzahl von reservierten Ressourcen ist; und
Auswählen eines migrierbaren Knotens als den migrierenden Knoten basierend auf einem Wert von Nᵢ von jedem migrierbaren Knoten.

6. Verfahren nach Anspruch 5, wobei das Sortieren, basierend auf Anzahlen von belegten Ressourcen, der zugewiesenen Dienstanforderungen, die jedem migrierbaren Knoten entsprechen, umfasst:
Sortieren der zugewiesenen Dienstanforderungen, die jedem migrierbaren Knoten entsprechen, in aufsteigender Reihenfolge der Anzahlen von belegten Ressourcen.

7. Verfahren nach Anspruch 5, wobei das Auswählen des migrierbaren Knotens als den migrierenden Knoten, basierend auf dem Wert von Nᵢ von jedem migrierbaren Knoten, umfasst:
Sortieren der migrierbaren Knoten in aufsteigender Reihenfolge der Werte von Nᵢ; und
Auswählen eines aktuellen migrierbaren Top-Knotens als den migrierenden Knoten.

8. Verfahren nach Anspruch 1, wobei das Migrieren von M zugewiesenen Dienstanforderungen, die dem Migrationsknoten entsprechen, zu dem mindestens einen anderen Knoten umfasst:
für jede der M zugewiesenen Dienstanforderungen,
Ermitteln, basierend auf einer Anzahl von Ressourcen, die durch die Anforderung belegt sind, ob die Anforderung zu einem Zielknoten migrierbar ist, der nicht der migrierende Knoten ist; und
wenn ja,
Reservieren, in dem Zielknoten, einer Anzahl von Ressourcen, die von der zugewiesenen Dienstanforderung benötigt werden, und danach Migrieren der zugewiesenen Dienstanforderung zu dem Zielknoten.

9. Verfahren nach Anspruch 2, wobei das Freigeben der Ressourcen, die von den M zugewiesenen Dienstanforderungen in dem migrierenden Knoten belegt sind, ferner umfasst:
Markieren jeder freigegebenen Ressource als reservierte Ressource für die aktuell empfangene Dienstanforderung.

10. Verfahren nach Anspruch 1, wobei
das Verfahren auf eine Clusterressourcenplanung angewandt wird, und wobei sich jeder Knoten in einem Cluster befindet;
und/oder
die Ressource mindestens eine von einer Hardwareressource oder einer virtuellen Ressource umfasst;
und/oder
der Knoten eine physische Maschine oder eine virtuelle Maschine ist.

11. Einrichtung, wobei die Einrichtung umfasst:
ein Modul zum Ermitteln von reservierten Ressourcen (601), das konfiguriert ist zum Ermitteln einer Anzahl von reservierten Ressourcen, die in einem Knoten reserviert werden müssen, wobei das Modul zum Ermitteln von reservierten Ressourcen (601) ferner konfiguriert ist zum: Schätzen von umfangreichen Ressourcen, die von zukünftigen Dienstanforderungen benötigt werden; und Ermitteln, basierend auf den Anforderungen für die umfangreichen Ressourcen, der Anzahl von reservierten Ressourcen, die in dem Knoten reserviert werden müssen;
ein erstes Filtermodul (602), das konfiguriert ist zum: Ermitteln von Knoten, in denen Anzahlen von aktuell verbliebenen Ressourcen kleiner als die Anzahl von reservierten Ressourcen sind; Berechnen, für jeden ermittelten Knoten, einer Gesamtanzahl von Ressourcen, die von zugewiesenen Dienstanforderungen in dem Knoten belegt sind; und Ermitteln, basierend auf der berechneten Gesamtanzahl von Ressourcen, ob der Knoten in der Lage ist, die Anzahl von reservierten Ressourcen zu erfüllen; und falls ja, Markieren des Knotens als einen migrierbaren Knoten;
ein zweites Filtermodul (603), das konfiguriert ist zum: Auswählen eines migrierenden Knotens aus den migrierbaren Knoten; und Ermitteln von M zugewiesenen Dienstanforderungen in dem migrierenden Knoten; und
ein Migrationsmodul (604), das konfiguriert ist zum: Migrieren der M zugewiesenen Dienstanforderungen, die dem migrierenden Knoten entsprechen, zu mindestens einem anderen Knoten; und Freigeben von Ressourcen, die von den M zugewiesenen Dienstanforderungen in dem migrierenden Knoten belegt sind, wobei M eine Bedingung erfüllt, dass, nachdem die Ressourcen, die von den M zugewiesenen Dienstanforderungen belegt sind, freigegeben wurden, eine Anzahl von verbliebenen Ressourcen in dem migrierenden Knoten nicht kleiner als die Anzahl von reservierten Ressourcen ist.

12. Computervorrichtung, die einen Speicher und einen Prozessor umfasst, wobei in dem Speicher ein ausführbarer Code gespeichert ist, der, wenn er von dem Prozessor ausgeführt wird, den Prozessor veranlasst, das Verfahren nach einem der Ansprüche 1 bis 10 durchzuführen.

13. Nicht-flüchtiges computerlesbares Medium, das Anweisungen umfasst, die, wenn sie von einem Computer ausgeführt werden, den Computer veranlassen, das Verfahren nach einem der Ansprüche 1 bis 10 auszuführen.

## Revendications

1. Procédé mis en œuvre par ordinateur pour l'utilisation de ressources, le procédé comprenant les étapes suivantes :
déterminer (301) une quantité de ressources réservées qui doivent être réservées dans un nœud, ce qui comprend
d'estimer les ressources à grande échelle requises par les futures demandes de service, et
déterminer, sur la base du besoin en ressources à grande échelle, la quantité de ressources réservées qui doivent être réservées dans le nœud ;
déterminer (303) les nœuds dans lesquels les quantités de ressources restantes courantes sont inférieures à la quantité de ressources réservées ;
calculer (305), pour chaque nœud déterminé, une quantité totale de ressources occupées par les demandes de service allouées dans le nœud ;
déterminer (307) pour chaque nœud déterminé sur la base de la quantité totale de ressources calculée, si le nœud est capable de satisfaire la quantité de ressources réservées et, si tel est le cas, marquer le nœud comme étant un nœud pouvant migrer ;
sélectionner (309) un nœud en cours de migration parmi des nœuds pouvant migrer ;
migrer (311), vers au moins un autre nœud, M demandes de service allouées correspondant au nœud en cours de migration ;
libérer les ressources occupées par les M demandes de service allouées dans le nœud en cours de migration, M satisfaisant à une condition selon laquelle, après libération des ressources occupées par les M demandes de service allouées, une quantité de ressources restantes dans le nœud en cours de migration n'est pas inférieure à la quantité de ressources réservées, M étant un entier positif non inférieur à 1 ;
ajouter les ressources restantes courantes du nœud en cours de migration à un pool de de ressources en cache ; et
lorsqu'une demande de service est reçue, allouer les ressources restantes dans le nœud à partir du pool de ressources en cache pour la demande de service.

2. Procédé selon la revendication 1, dans lequel la détermination de la quantité de ressources réservées qui doivent être réservées dans le nœud comprend l'étape suivante :
déterminer, sur la base des tailles de ressources requises par une demande de service actuellement reçue, la quantité de ressources réservées qui doivent être réservées dans le nœud ; et
le procédé comprenant en outre l'étape suivante :
après avoir libéré les ressources occupées par les M demandes de service allouées dans le nœud en cours de migration :
allouer les ressources restantes courantes dans le nœud en cours de migration pour la demande de service actuellement reçue.

3. Procédé selon la revendication 1, dans lequel une demande de service allouée des demandes de service allouées est une demande de service allouée dont l'attribut de service permet la migration.

4. Procédé selon la revendication 1, dans lequel la détermination, sur la base de la quantité totale de ressources calculée, du fait que le nœud est capable ou non de satisfaire la quantité de ressources réservées comprend les étapes suivantes :
déterminer si la somme de la quantité totale de ressources calculée et de la quantité de ressources restantes courantes dans le nœud n'est pas inférieure à la quantité de ressources réservées et, dans l'affirmative, déterminer que la quantité de ressources réservées est satisfaite où, en conséquence, M satisfait à la condition que la somme de la quantité totale de ressources occupées par les M demandes de service allouées et de la quantité de ressources restantes courantes dans le nœud ne soit pas inférieure à la quantité de ressources réservées ; ou
déterminer si la quantité totale calculée de ressources n'est pas inférieure à la quantité de ressources réservées, et, dans l'affirmative, déterminer que la quantité de ressources réservées est satisfaite, M satisfaisant en conséquence à la condition que la quantité totale de ressources occupées par les M demandes de service allouées ne soit pas inférieure à la quantité de ressources réservées.

5. Procédé selon la revendication 1, dans lequel la sélection du nœud en cours de migration parmi les noeuds pouvant migrer lors de la détermination qu'il y a deux noeuds, ou plus, dans lesquels les quantités de ressources restantes actuelles sont inférieures à la quantité de ressources réservées comprend les étapes suivantes :
trier, pour chaque nœud pouvant migrer, sur la base des quantités de ressources occupées, les demandes de service allouées correspondant au nœud pouvant migrer ; sélectionner les Nᵢ requêtes de service allouées supérieures pour un i^{e} nœud pouvant migrer, où Nᵢ est un entier non inférieur à 1, et Nᵢ satisfait à la condition qu'une fois que les ressources occupées par les Nᵢ requêtes de service allouées supérieures sont libérées, la quantité de ressources restantes dans le i^{e} nœud pouvant migrer n'est pas inférieure à la quantité de ressources réservées ; et
sélectionner un nœud pouvant migrer comme nœud en cours de migration sur la base de la valeur de Nᵢ de chaque nœud pouvant migrer.

6. Procédé selon la revendication 5, dans lequel le tri des demandes de service allouées correspondant à chaque nœud pouvant migrer sur la base de quantités de ressources occupées comprend l'étape suivante :
trier les demandes de service allouées correspondant à chaque nœud pouvant migrer dans l'ordre croissant des quantités de ressources occupées.

7. Procédé selon la revendication 5, dans lequel la sélection du nœud pouvant migrer en tant que nœud en cours de migration sur la base de la valeur de Nᵢ de chaque nœud pouvant migrer comprend les étapes suivantes :
trier des nœuds pouvant migrer par ordre croissant des valeurs de Nᵢ ; et
sélectionner un nœud pouvant migrer supérieur actuel comme nœud en cours de migration.

8. Procédé selon la revendication 1, dans lequel la migration, vers l'au moins un autre nœud, de M demandes de service allouées correspondant au nœud en cours de migration comprend les étapes suivantes :
pour chacune des M demandes de service allouées,
déterminer, sur la base d'une quantité de ressources occupées par la demande, si la demande peut migrer vers un nœud cible autre que le nœud en cours de migration ; et
dans l'affirmative,
réserver, dans le nœud cible, une quantité de ressources requises par la demande de service allouée, puis faire migrer la demande de service allouée vers le nœud cible.

9. Procédé selon la revendication 2, dans lequel la libération des ressources occupées par les M demandes de service allouées dans le nœud en cours de migration comprend en outre l'étape suivante :
marquer chaque ressource libérée en tant que ressource réservée pour la demande de service actuellement reçue.

10. Procédé selon la revendication 1, dans lequel
le procédé est appliqué à l'ordonnancement des ressources d'un regroupement, et chaque nœud appartient à un regroupement ;
et/ou
la ressource comprend l'une au moins parmi une ressource matérielle ou une ressource virtuelle ;
et/ou
le nœud est une machine physique ou une machine virtuelle.

11. Appareil, l'appareil comprenant :
un module de détermination de ressources réservées (601), configuré pour déterminer une quantité de ressources réservées devant être réservées dans un nœud, le module de détermination de ressources réservées (601) étant en outre configuré pour estimer des ressources à grande échelle requises par les futures demandes de service, et déterminer, sur la base du besoin de ressources à grande échelle, la quantité de ressources réservées devant être réservées dans le nœud ;
un premier module de filtrage (602), configuré pour déterminer des nœuds dans lesquels les quantités de ressources restantes courantes sont inférieures à la quantité de ressources réservée ; calculer, pour chaque nœud déterminé, une quantité totale de ressources occupée par des demandes de service allouées dans le nœud ; et déterminer, à partir de la quantité totale de ressources calculée, si le nœud est capable de satisfaire la quantité de ressources réservée et, si oui, marquer le nœud comme un nœud pouvant migrer ;
un deuxième module de filtrage (603), configuré pour sélectionner un nœud en cours de migration parmi les noeuds pouvant migrer, et déterminer M demandes de service allouées dans le nœud en cours de migration ; et
un module de migration (604), configuré pour faire migrer, vers au moins un autre nœud, les M demandes de service allouées correspondant au nœud en cours de migration ; et libérer les ressources occupées par les M demandes de service allouées dans le nœud en cours de migration, M satisfaisant à une condition selon laquelle, après libération des ressources occupées par les M demandes de service allouées, la quantité de ressources restantes dans le nœud en cours de migration n'est pas inférieure à la quantité de ressources réservées.

12. Dispositif informatique comprenant une mémoire et un processeur, la mémoire stockant du code exécutable par ordinateur qui, lorsqu'il est exécuté par le processeur, amène le processeur à réaliser le procédé selon l'une quelconque des revendications 1 à 10.

13. Support non transitoire lisible par ordinateur comprenant des instructions qui, lorsqu'elles sont exécutées par un ordinateur, amènent l'ordinateur à exécuter le procédé selon l'une quelconque des revendications 1 à 10.
